# EUROPEAN PATENT APPLICATION

(11) **EP 1 923 773 A2**
(43) Date of publication of application: **21.05.2008**
(21) Application number: 07020451.6
(22) Date of filing: 18.10.2007
(51) Int. Cl.: G06F 3/01

(54) **System with differentiated user controls and method for operating system with personalized user controls**

(30) Priority: 17.11.2006 US 601425
(71) Applicant: MITSUBISHI ELECTRIC CORPORATION, Chiyoda-ku Tokyo 100-8310 (JP)
(72) Inventor: Harsham, Bret A., Newton MA 02461 (US); Aikawa, Masami, Tokyo 100-8310 (JP); Matsubara, Tsutomu, Tokyo 100-8310 (JP); Miyazaki, Hideto, Tokyo 100-8310 (JP)
(74) Representative: Pfenning, Meinig & Partner GbR

(57) **Abstract**

A system differentiates user controls by arranging a conductive surface in a close approximation to each control. A transmitter is connected to the conductive surfaces. The transmitter emits a unique signal to each conductive surface. Electrodes are arranged in close proximity to users of the controls, and a receiver is connected to each corresponding electrode. A particular user is associated with a particular control when the particular user is capacitively coupled to a particular conductive surface via the electrode, the receiver and the transmitter. Images are displayed to the users using display devices. The display devices present concurrently multiple images to multiple users. The controls may include virtual controls displayed as icons on a touch-sensitive surface displaying the images.

## Description

### BACKGROUND OF THE INVENTION

### 1. Field of the Invention

This invention relates generally to user controls, and more particularly to user controls that differentiate particular users touching the controls.

### 2. Description of the Related Art

Plant control rooms, airplane cockpits and vehicle dashboards typically include a large number of physical user controls, e.g., control switches, keyboards, mice, touch screens, etc., that can be used concurrently by multiple users to operate systems. Conventional systems have no way for easily distinguishing which particular user has activated a particular control. Thus, all controls operate identically for every user. In addition, there is no way to record a history of which users operated which controls.

There are single user systems that attempt to identify the user and operate the system accordingly. Logging onto a computer system is a common example. However, in this case, it is presumed that only one user operates the physical user interface of the system, e.g., a workstation, after logging on. The system has no way of knowing whether multiple users are interacting with the interface.

The Personal Area Network (PAN), is a system for transferring data by touch, Thomas Zimmerman, "Personal Area Networks: Near-field intrabody communication," Vol. 35, No. 3&4, MIT Media Lab, 1996. PAN uses low frequency electric fields conducted through the user. Data transferred can include a user identity, so a properly enabled doorknob can be programmed to only respond to particular users. Unfortunately, that system is not designed for user interface applications, such as control panels. Adding PAN-type interfaces to many controls is prohibitively expensive. Also, there are significant data collision problems to solve when multiple controls are operated concurrently by a single user.

The Fingerprint User Interface, is a system for operating devices based on the fingerprint of the particular user, Sugiura, Atsushi, Koseki, Yoshiyuki, "A User Interface using Fingerprint Recognition: Holding Commands and Data Objects on Fingers," Mynatt, Elizabeth D., Jacob, Robert J. K. (ed.), Proceedings of the 11th annual ACM symposium on User interface software and technology, p.71-79, November, 1998. That interface allows functionality to vary not only between users, but also between different fingers of the same user. However, that system requires a fingerprint sensor in every device and is not suitable for small controls, such as switches, and user interface applications including a large number of controls. In addition, the cost of integrating a fingerprint sensor into every control is prohibitive.

The Diamond Touch system is an example of a multi-user interface device, see Dietz et al., "Diamond Touch: A multi-user touch technology," Proc. User Interface Software and Technology (UIST) 2001, pp. 219-226, 2001, and U.S. Patent No. 6,498,590 "Multi-user touch surface," issued to Dietz et al., on December 24, 2002, incorporated herein by reference. The Diamond Touch system has many desirable properties. A Diamond Touch system includes an array of antennas embedded in a touch surface. Each antenna transmits a uniquely identifiable signal. By sensing how these signals are coupled through a user, the system determines where the user is touching the surface. Connecting each user to a separate receiver enables the system to uniquely identify locations touched by each user. However, the Diamond Touch system is restricted to specialized touch surfaces with a pattern of embedded antennas.

Certain display systems can display concurrently multiple images from a single device having a single display screen or monitor. The display screen can be a CRT, LCD, or similar display surfaces. Alternatively, the images can be projected on the single screen using front or rear projection. Herein, these display systems are generally referred to as multiple-view displays. With multiple-view displays, different users concurrently perceive different images.

An example of a multiple-view display system is described by Montgomery et al., U.S. Patent Application No. 10/875,870, "Multiple view display," incorporated by reference. There, a parallax barrier is used to form distinct viewing regions. Each viewing region provides a different image to a viewer in the region.

Another example of a multiple-view display device is provided in Yerazunis et al., U.S. Patent No. 6,650,306, "Security-enhanced display device," granted on November 18, 2003, and incorporated by reference. In that system, the display device generated images having different polarizations. Users viewing the display normally perceived one image, while users viewing the display through an optical shutter device perceived a different image.

It is desired to provide a user interface that can cause a system to operate differently for multiple users. In addition, such a system should be able to record the usage history of each user.

It is also desired to provide a multi-user control system including means for displaying concurrently multiple images to multiple users.

### SUMMART OF THE INVENTION

The present invention provides a control system and method capable of differentiating between multiple users operating the controls of the system, and displaying multiple images to the multiple users using a multiple-view display device.

In one embodiment of the invention, the controls of the system are physically separate from the displayed images. The images displayed to a particular user are dependent on the particular user actuating a particular control. The images perceived by other users of the system can be independent of the particular user actuating a control.

In another embodiment of the invention, the multiple images are displayed on a touch-sensitive display surface. Some or all of the controls of the system are virtual and are displayed as icons on the touch-sensitive surface. The sets of controls displayed to the users of the system can be the same or different for each user. The images displayed to a particular user are dependent on the particular user actuating a particular control. The images perceived by other users of the system can be independent of the particular user actuating a control.

### BRIEF DESCRIPTION OF THE DRAWINGS

Figure 1 is a schematic of a multi-user control system according to the invention;
Figure 2 is a schematic of a multi-user control system with a resistive touch-sensitive screen;
Figure 3 is a flow diagram of a method for operating the control system of Figure 2;
Figure 4 is a schematic of a multi-user control system with a single-view display device;
Figure 5 is a schematic of a multi-user control system with a multiple-view display device; and
Figure 6 is a schematic of a multi-user control system with a multiple-view display device and a touch sensitive surface.

### DETAILED DESCRIPTION OF THE PREFERRED EMBODIMENTS

### System Overview

The invention differentiates operations and behaviors of controls of systems according to different users. The invention is concerned with systems that are typically included in control rooms, airplanes, and vehicles, to name but a few examples. It is desired to operate the system dependent upon the particular users actuating the controls. Both the system functionality and behavior may vary according to the different users. Behavior refers to the 'look and feel' of a control. For example, the behavior can be altered by haptic feedback.

### Controls

In the preferred embodiment of the invention, controls of the system are associated with corresponding conductive surfaces. Each conductive surface is connected to a transmitter that emits a uniquely identifiable signal associated with the control. The conductive surfaces are arranged so that a user is in a close physical proximity to the conductive surface in order to operate the corresponding control.

In addition, the conductive surfaces are arranged so that the capacitive coupling is substantially absent when the user is not near the corresponding controls. Furthermore, the conductive surfaces of the different controls are isolated electrically from each other. To aid detection of multiple, concurrent control usage, it is helpful to limit coupling so that a heavy touch on one control does not mask a light touch on another control. Therefore, a dielectric insulating layer is employed to prevent direct, resistive contact with the conductive surface, limiting coupling and decreasing the required dynamic range of receivers.

### Receiver

A receiver is coupled to each user of the system. The receivers are arranged to receive signals emitted by the conductive surfaces when the user selects and touches the corresponding controls. A convenient way to implement this is with a conductive sheet embedded in the seating and/or back surfaces of chairs occupied by the users. Alternatively, each user can be equipped with a portable receiver, which is worn by the person during use.

### Transmitter

Because a typical system can have tens or hundreds of controls, an efficient way of generating the unique signal for each control uses time-shifted variations of a binary sequence produced by a linear feedback shift register in the transmitter coupled to the conductive surface. This same binary sequence is used in the receivers coupled to the users. A cross-correlation determines the amount of received signal for each shift. This type of signaling is known as code division, multiple access (CDMA). However, other ways for generating the unique signals are also possible, including time division, multiple access (TDMA), and frequency division techniques, see U.S. Patent No. 6,498,590, incorporated herein by reference, for other possible signaling implementations.

In some installations, it may be inconvenient to individually wire the unique transmitter signals to each control. An alternative is to generate some or all of the signals locally. This is particularly useful when the controls are already connected to a communications bus and do not have provisions for unique connections. In this case, the bus can be used to synchronize the signals.

### Touch-Sensitive Controls

One control device of particular importance is a touch-sensitive display screen. It is possible to use the conductive surface of a conventional resistive touch-sensitive screen without modifying the device. Because these types of devices already include a conductive surface, this surface can be modulated directly. In this embodiment, the touch surface operates alternatively as a conventional resistive touch surface, and a modulated conductive surface. It is also possible to continuously modulate this conductive surface, even while measuring touched locations conventionally.

### System Structure and Operation

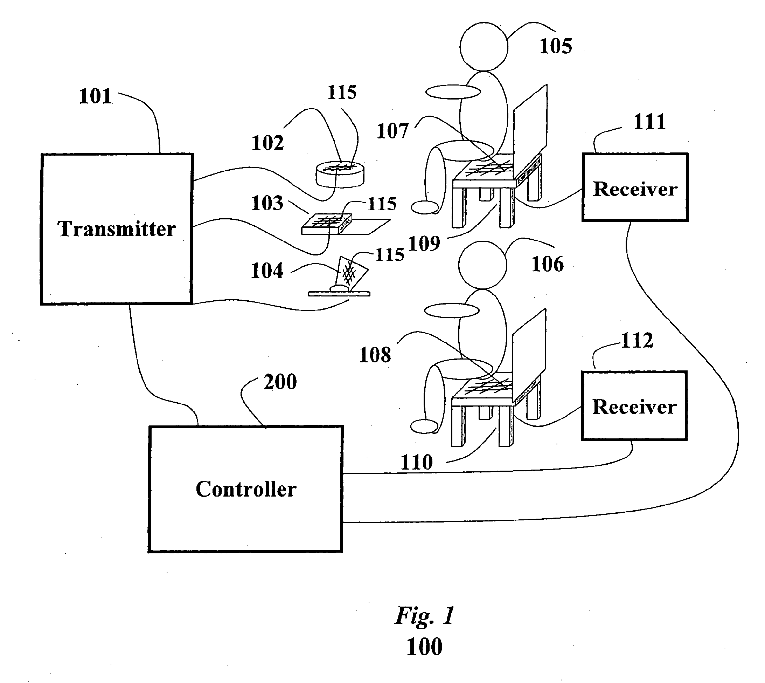

Figure 1 shows an example multi-user control system 100 according to the invention. A multi-channel transmitter 101 provides uniquely identifiable signals to conducting surfaces 115 physically proximal to controls 102-104. Multiple users 105-106 can activate the controls. The users are proximal to corresponding receiving electrodes 107 and 108. In this example, the electrodes are located in the seats of chairs 109 and 110 occupied by the users.

When the user is seated, the user is capacitively coupled to the receiving electrode in the chair. When the user touches a particular control, the user is also capacitively coupled to the conductive surface 115 for that control. Thus, an electrical path is formed between the conductive surface near the control to the receiving electrode near the user. The receiving electrodes are connected to corresponding receivers 111-112. The receivers can detect the uniquely identifiable signals from the conductive surfaces when capacitively coupled through the user.

The controls 102-104, receivers 111 and 112 and the transmitter 101 are connected to a controller 200. The controller provides synchronization information to the transmitter and the receivers, and takes appropriate action based upon settings of the controls activated by the users as determined by the user coupling at the time of actuation. In an alternative embodiment, the users are coupled to unique signal transmitters, and the signals can be received from each control independently.

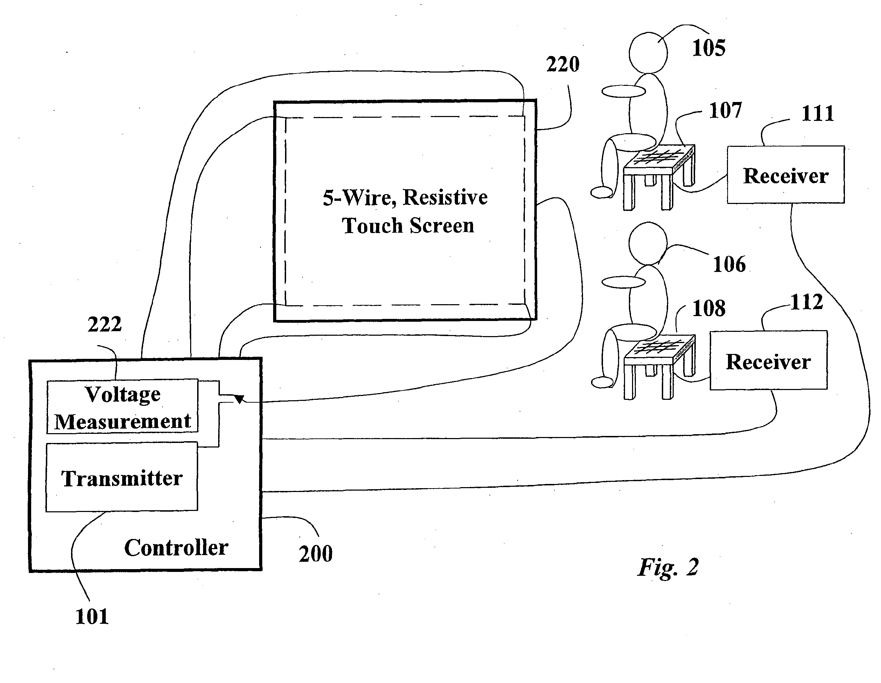

Figure 2 shows an embodiment of the invention using a 5-wire, resistive touch-sensitive screen, with wires connected to touch surfaces as known in the art. The screen 220 is unmodified, but uses a controller 200 according to the invention. The controller alternately measures 222 voltages indicative of touched locations, and decodes uniquely transmitted signals 101 indicative of particular users.

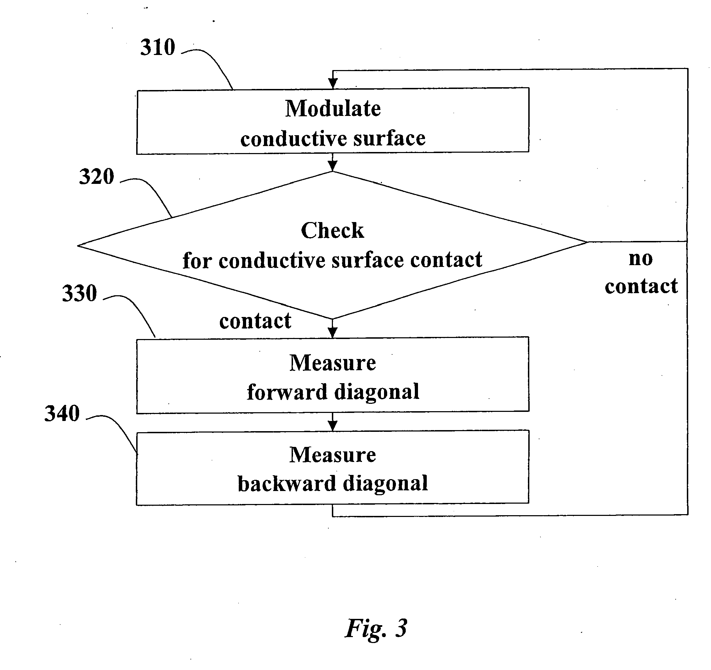

Figure 3 shows an operation of this embodiment. The conductive surface is modulated 310. Then, check 320 for user contact. If no contact, repeat the modulation. If there is contact, measure 330-340 voltages along the diagonals to determine the location of touch, and repeat.

Variations on this basic configuration are possible. For example, the same technique can be applied to a conventional 4-wire resistive touch screen, or other types of touch screens. If the modulated unique signals are sufficiently high in frequency and have a zero mean, then the signals can be added continuously without impacting the location measurement.

### User Identification

The embodiment of Figure 1 identifies the users based on proximity to a receiving electrode. In some circumstances, it may be advantageous to know the precise identity of the user. The user can be identified using a 'log-on' procedure. This log-on procedure can use any of the well-known techniques for identification such as providing a password, reading a security card or an RFID tag, inserting a key, scanning a fingerprint, and eye scanning. By simply monitoring the capacitance of the receiving electrode, the system can determine whether a user has entered or exited the area proximal to the electrodes in order to determine when log-on is required. Other means can be used for this purpose, including weight sensing. In this embodiment, the system does not accept control input from a newly seated user until the user is properly identified.

In other circumstances, it may be sufficient to know the class of the user. For instance, if the user is a child, it may be desirable to disable certain controls. In this case, a classification system may be used to determine the class of the user, e.g., by using a weight sensing device or any other object classification technique. The system can use any of the methods described above to determine when the user has entered or exited the area proximal to the system in order to determine when classification is required.

In other circumstances, it may be desirable to know the role that the user is playing in the interaction with the system and the other users. For example, in a car, the role of the driver is significantly different than the role of passengers. Likewise, the role of a teacher or instructor is different than the role of a student in a cockpit or control room situation. Particular roles may be associated with specific receivers. In the case of a vehicle, roles are frequently associated with seating positions, e.g., driver, passenger, pilot, copilot, etc. In a control room, specific portable receivers might be designated for a set of roles.

When the user's role, class, or identity is known, the system can operate differently for different users. The operation can differ in providing reduced or enhanced functionality, that is, what the system does in response to manipulation of a control, and/or in providing different behavior, that is, the response of the control itself. Haptic feedback from the control is an example of behavior that can differ on a per user basis. There are clearly some cases in the range between behavior and functionality, for example, using a different output modality for some user roles, e.g., audio for a driver and video for a passenger, are either behavior or functionality.

In this embodiment, both the behavior and functionality of the system can differ based on the operating user(s).

### Haptic Feedback

By changing the tactile feel of a control, the user has individualized feedback that is intuitive, and does not distract other users not touching the control, see U.S. Patent Application serial number 10/840,748 entitled "Hand-Held Haptic Stylus" filed by Dietz et al. on May 6, 2004 and incorporated herein by reference. Haptic feedback is particularly useful when the functionality of a control is user dependent. For example, a haptic pen, which is enabled for a specific user, can physically 'click' when pressed, but not respond for other users. There are a great many haptic devices that are known in the art that present a variety of programmable sensations. With the addition of a conductive surface driven with a unique signal according to the invention, the haptic response can now depend upon the particular user, as well as other, traditional factors.

### Visual Output

Visual feedback can be given to users of the control system by incorporating one or more visual display devices connected to the controller. The visual display devices can be configured to present a single image at a time as in, for example, computer monitors, projector or television screens, or can be configured to present multiple images concurrently as in multiple-view display devices such as, for example, parallax barrier or polarization rotation display devices. Any combination of single-image and multiple-image display devices can be used with the invention. The images presented to the users can be static images or videos.

The images presented to the users are modified according to input signals from the controller. The controller determines which user is activating a particular control and sends signals to the display devices to update the image or images according to the user and control.

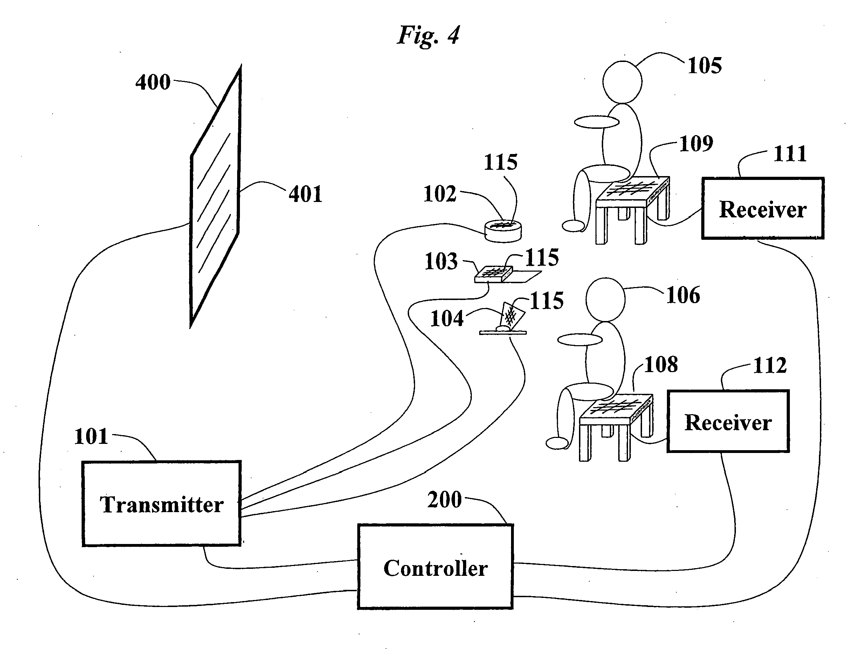

Figure 4 shows an embodiment of the invention using a display device 400 to display image 401 to users 105-106. The image 401 is modified by the display device 400 in response to signals sent by the controller 200. The signals generated by the controller 200 can, for example, indicate changes in system state, and user proximity to and manipulations of input controls. The system provides visual feedback of the current system state to each user.

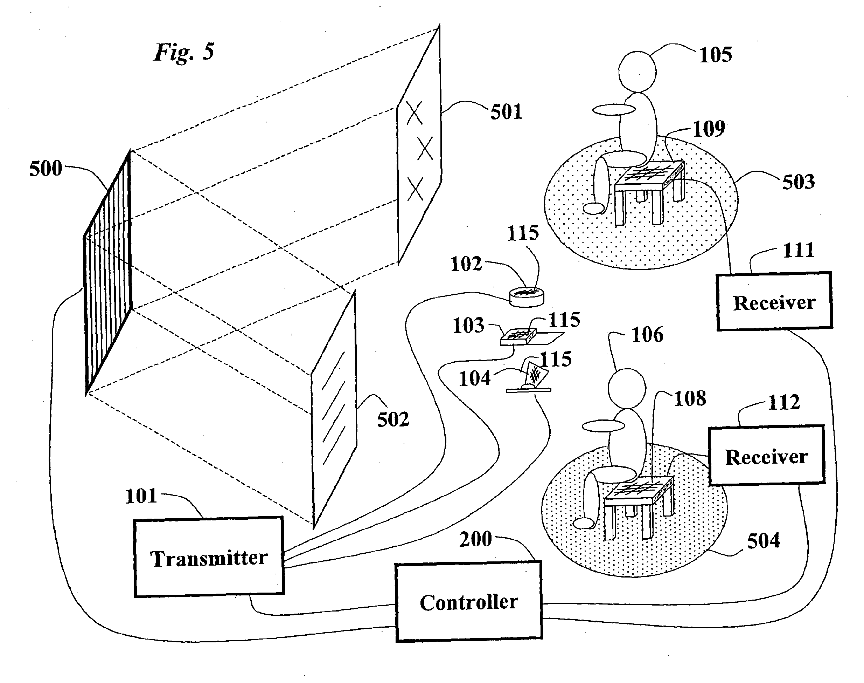

Figure 5 shows an embodiment of the invention using a multiple-view display device 500 to concurrently display different images 501-502 to users 105-106 in different viewing regions 503-504, generally shown stippled. The images 501-502 are modified by the multiple-view display device 500 in response to signals sent by the controller 200. The signals generated by the controller 200 can, for example, indicate changes in system state, and user proximity to and manipulations of input controls. The system provides separate visual feedback of the current system state to each user concurrently.

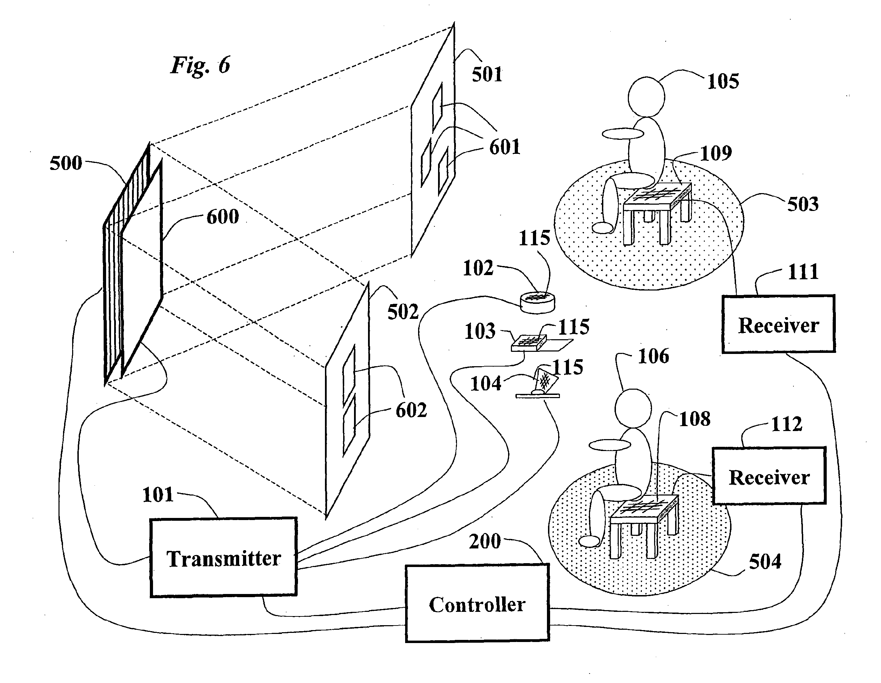

The embodiment in Figure 6 uses a touch-sensitive surface 600 in combination with the multiple-view display device 500. This allows users to directly interact with the displayed images 501-502. Because the users 105-106 perceive different images in the different respective viewing regions 503-504, and because the touch-sensitive surface 600 of the invention can detect which user is proximate to the touch-sensitive surface, the system can present co-located sets of virtual controls 601-602. The sets may have different appearance and functionality, and may contain different virtual controls including buttons, switches, menus, icons, etc.

When the user's receivers are connected to particular physical locations such as to specific chairs, a multiple-view display system with one viewing region per receiver is preferred.

### Applications

The invention can augment vehicle controls. By placing the electrodes in seats or seat belts, the system can distinguish controls operated by the driver or passengers, and modify the operation of the controls accordingly, perhaps, according to user role and preset user preferences.

Some navigation systems are disabled while the vehicle is moving to minimize driver distraction. With the invention, it is possible to permit passengers to operate navigation functions while the vehicle is in motion, while disabling those same functions for the driver. Similarly, feedback can be provided in audio or visual form depending on which vehicle occupant touched the control.

Some controls, such as door, window, entertainment, seat and environmental controls, are duplicated in vehicles. This increases cost. The invention enables a single set of controls to operate differently for different users depending on the user's role as determined by seating location within the vehicle and/or preset user preferences.

In addition, a 'push-to-talk' (PTT) control of a radio transceiver can be arranged between the seats. Then, the invention can be used to acoustically 'steer' a microphone array towards the particular user touching the PTT control. Thus, a multi-user voice interface based on a single control can be enabled.

Airplane cockpits and control rooms frequently record every action taken by pilots and operators. This is useful for training, and operational and accident analysis. Currently, there is no easy way to know whether the pilot or the co-pilot actuated a particular control. The personalized controls according to the invention solve this problem, particularly when control data is time-stamped to provide a journal.

Because the invention detects the proximity of all users at any given time, it is possible to require that multiple users actuate a particular control at the same time for safety reasons. For example, it is common practice that both pilots have a hand on the throttle during take-offs and landing. With this invention, it becomes possible to enforce this practice.

## Claims

1. A system with differentiated user controls, comprising:
a plurality of controls (102-104);
a conductive surface (115) arranged in a close proximity to each control (102-104);
a transmitter (101) connected to the conductive surface (115), the transmitter (101) emitting a unique signal to each conductive surface (115);
a plurality of electrodes (107,108), each electrode (107,108) arranged in close proximity to a particular one of a plurality of users of the controls (102-104);
a receiver (111,112) connected to each corresponding electrode (107,108);
means (200) for associating the particular user with a particular control when the particular user is capacitively coupled to a particular conductive surface via the electrode (107,108), the receiver (111,112) and the transmitter (101); and
a display device (400) configured to display concurrently a plurality of images to the plurality of users, each user perceiving a particular image dependent on the unique signal for the particular surface associated with the particular control and user.

2. The system of claim 1, in which the display device (400) uses a parallax barrier to present different images in different viewing regions associated with the different users.

3. The system of claim 1 in which the display device (400) uses polarization rotators to present different images to the plurality of users when the users view the images through optical shutter devices.

4. The system of claim 1, in which the images are static images.

5. The system of claim 1, in which the images are videos.

6. The system of claim 1, further comprising:
a touch-sensitive surface (600), in which the conductive surface (115) is arranged on the touch-sensitive surface.

7. The system of claim 6, in which the display device (400) displays the plurality of images so that the images are perceived on the touch-sensitive surface (600).

8. The system of claim 7, in which the plurality of controls (102-104) are icons displayed on the touch-sensitive surface.

9. The system of claim 1, further comprising:
a display device (400) configured to display a single image comprising a combination of the plurality of images.

10. The system of claim 1, in which the plurality of controls (102-104) are arranged in a vehicle.

11. The system of claim 1, in which the plurality of controls (102-104) are arranged in an airplane.

12. The system of claim 1, in which the plurality of controls (102-104) are arranged in a control room.

13. The system of claim 1, in which the plurality of images (501,502) are projected.

14. A method for operating a system with personalized user controls, comprising:
transmitting (101) a unique signal to each one of a plurality of conductive surfaces (115), each conductive surface (115) arranged in a close proximity to each corresponding one of a plurality of controls (102-104);
receiving (111,112) a particular one of the unique signals in a receiver coupled to an electrode (107,108) arranged in close proximity to a particular one of a plurality of users touching a particular control;
operating (200) the system according to the particular unique signal; and
displaying (400) concurrently a plurality of images to the plurality of users, each user perceiving a particular image dependent on the unique signal for the particular surface associated with the particular control and user.

15. A method for operating a system with personalized user controls, comprising:
transmitting (101) a unique signal to each one of a plurality of conductive surfaces (115), each conductive surface (115) arranged in a close proximity to each corresponding one of a plurality of controls (102-104);
receiving (111,112) a particular one of the unique signals in a receiver coupled to an electrode (107,108) arranged in close proximity to a particular one of a plurality of users touching a particular control; and
displaying (400) concurrently a plurality of images to the plurality of users, each user perceiving a particular image dependent on the unique signal for the particular surface associated with the particular control and user.
